# EUROPEAN PATENT APPLICATION

(11) **EP 3 301 904 A1**
(43) Date of publication of application: **04.04.2018**
(21) Application number: 17152854.0
(22) Date of filing: 24.01.2017
(51) Int. Cl.: H04N 5/232

(54) **A SYSTEM AND METHOD FOR STENCIL BASED ASSISTIVE PHOTOGRAPHY**

(30) Priority: 30.09.2016 IN 201641033465
(71) Applicant: Wipro Limited, 560 035 Karnataka (IN)
(72) Inventor: JAYARAJ, Ragupathy, 560068 Karnataka (IN); PRABHU, Mukesh Manjunath, 560102 Karnataka (IN)
(74) Representative: Finnegan Europe LLP

(57) **Abstract**

A system and method for stencil based assistive photography are disclosed. The method includes obtaining by an assistive photography system, one or more image frames including at least one subject for photography. The method further includes generating dynamically, by the assistive photography system, an assistive stencil, based on the at least one subject and one or more predefined photograph requirements. Thereafter the method includes displaying by the assistive photography system, the assistive stencil on a display device to provide assistance during photography.

## Description

### Technical Field

This disclosure relates to assistive photography, and more particularly to a system and method for stencil based assistive photography.

### Background

With the increase in quality and popularity of devices having photograph-capturing functionality, such as cameras, mobile phones and tablets, photographs are increasingly gaining importance in the processes defined for different purposes. For example, photographs are used for the purpose of situation documentation, subject identification and subject condition assessment. For such uses, the photographs may need to meet certain requirements to qualify for usage. As an example, passport issuing authorities may specify certain requirements regarding the dimensions of the photograph, the dimensions of the subject within the photograph and the background color of the photograph.

A user may not be able to take the photographs, due to the photographer's lack of knowledge of the requirements or due to manual error by the photographer. Further, there is no standardized way to specify and communicate the photography requirements to an end user. Different assistive photography techniques may exist in the state of the art, however these take the assistance of pre-created stencils, which do not take into consideration the unique features of the subjects for photography. Hence the pre-created stencils may not be suitable for different unique subjects.

### SUMMARY

In one embodiment, a method for assistive photography is described. The method includes obtaining by an assistive photography system, one or more image frames including at least one subject for photography. The method further includes generating dynamically, by the assistive photography system, an assistive stencil, based on the at least one subject and one or more predefined photograph requirements. Thereafter, the method includes displaying by the assistive photography system, the assistive stencil on a display device to provide assistance during photography.

In another embodiment, system for assistive photography is disclosed. The system includes at least one processor and a memory. The memory stores instructions that, when executed by the at least one processor, causes the at least one processor to perform operations including, obtaining one or more image frames including at least one subject for photography. The operations further include generating dynamically an assistive stencil based on the at least one subject and one or more predefined photograph requirements. The memory may further include instructions to display the assistive stencil on a display device to provide assistance during photography.

In another embodiment, a non-transitory computer-readable storage medium for assistive photography is disclosed, which when executed by a computing device, cause the computing device to perform operations including obtaining by an assistive photography system, one or more image frames including at least one subject for photography. The operations further include generating dynamically an assistive stencil based on the at least one subject and one or more predefined photograph requirements. The operations may further include displaying the assistive stencil on a display device to provide assistance during photography.

It is to be understood that the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
Figure 1 illustrates an assistive photography system (APS) in accordance with some embodiments of the present disclosure.
Figure 2 illustrates exemplary predefined photograph requirements in accordance with some embodiments of the present disclosure.
Figure 3A illustrates an exemplary image frame with a first subject having a first set of characteristics according to some embodiments of the present disclosure.
Figure 3B illustrates an exemplary image frame with a second subject having a second set of characteristics according to some embodiments of the present disclosure.
Figures 4A illustrates an exemplary stencil of a first subject stencil created based on photographic requirements according to some embodiments of the present disclosure.
Figure 4B illustrates an exemplary stencil of a second stencil created based on photographic requirements according to some embodiments of the present disclosure.
Figure 5 illustrates an exemplary illustration of a subject recognizer according to some embodiments of the present disclosure.
Figure 6A illustrates an exemplary first assistive stencil based on subject recognition in accordance with some embodiments of the present disclosure.
Figure 6B illustrates an exemplary second assistive stencil based on subject recognition and object recognition in accordance with some embodiments of the present disclosure.
Figure 7 illustrates an exemplary method for assistive photography in accordance with some embodiments of the present disclosure.
Figure 8 is a block diagram of an exemplary computer system for implementing embodiments consistent with the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Embodiments of the present disclosure provide a system and method for assistive photography, including methods of dynamically creating assistive stencil. The present subject matter obtains image frames corresponding to a subject to be photographed. Subsequently, the subject to be photographed may be identified from the image frames. The identification of the subject may be performed using various object detection, edge detection and facial detection techniques. On determination of the subject, an assistive stencil may be dynamically generated of the subject. In addition to the subject, certain predefined photograph requirements may also be considered while generating the assistive stencil. The stencil may then be displayed on a display device for assisting a user to take photographs in compliance with the photograph requirements.

The term "assistive stencil" as used herein preferably refers to graphical information that is displayed to guide a user in positioning a subject within a photograph. In this manner, the assistive stencil can help the user to take a photograph having a desired composition. The assistive stencil may include features (such as a border) corresponding to the features of the subject to be photographed, such that the user can achieve the desired composition by aligning the features of the stencil with the corresponding features of the subject. The assistive stencil may be displayed on a display a device that is used to take the photograph.

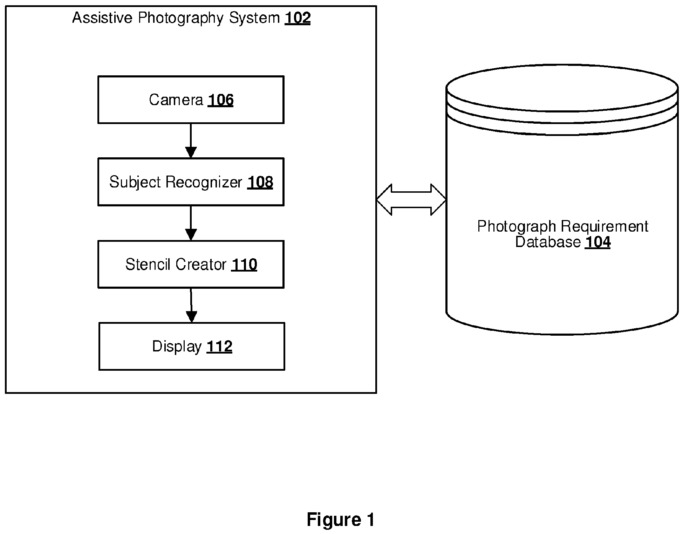

Figure 1 illustrates an assistive photography system (APS) in accordance with some embodiments of the present disclosure. The APS 102 may be communicatively coupled with a photograph requirement database 104. The APS 102 comprises a camera 106, a subject recognizer 108, a stencil creator 110 and a display 112.

Further, the APS 102 may communicate with the photograph requirement database 104, through a network. The network may be a wireless network, wired network or a combination thereof. The network can be implemented as one of the different types of networks, such as intranet, local area network (LAN), wide area network (WAN), the internet, and such. The network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network may include a variety of network devices, including routers, bridges, servers, computing devices, storage devices, etc. In some embodiments, the photograph requirement database 104 may be a local database present within the APS 102.

The APS 102 may be implemented on variety of computing systems. Examples of the computing systems may include a laptop computer, a desktop computer, a tablet, a notebook, a workstation, a mainframe computer, a smart phone, a server, a network server, and the like. Although the description herein is with reference to certain computing systems, the systems and methods may be implemented in other computing systems, albeit with a few variations, as will be understood by a person skilled in the art.

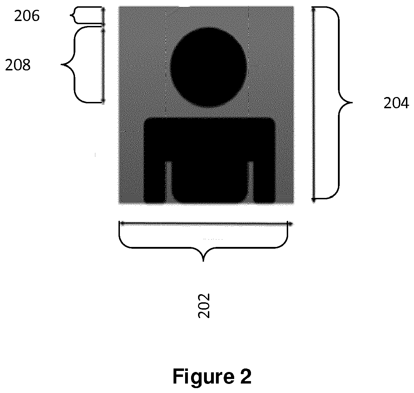

As shown in Figure 1, the photograph requirement database 104 may include one or more pre-defined photograph requirements. The photograph requirements may correspond to certain conditions that have to be satisfied in order for the photograph to be acceptable for a particular purpose. Figure 2 illustrates an exemplary photograph having predefined photograph requirements in accordance with some embodiments of the present disclosure. The photograph requirements may be predefined by an authorizing authority. For example, a user may have to submit photographs to a Government Agency for issuance of passport. In order for the photographs to be accepted by the Government Agency, the Government Agency may specify one or more requirements that are to be met by the photographs. As an example, a requirement specified by the Government Agency may be that width of photograph is to be 40mm as indicated by 202 in Figure 2, height of the photograph is to be 50mm as indicated by 204 in Figure 2, background color is to be gray, margin above recognized subject within the photograph is to be 5mm as indicated by 206 in Figure 2, and height of the recognized subject is to be 15mm as indicated by 208 in Figure 2.

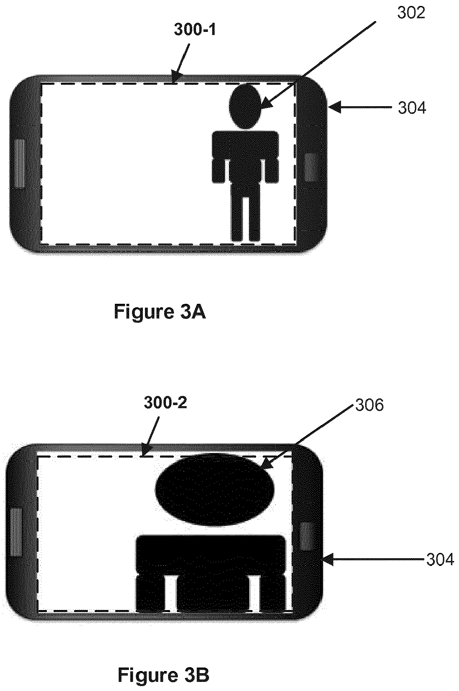

Referring back to Figure 1, the APS 102 may include a camera 106 for capturing various image frames including at least one subject, for which a stencil may be created. In the context of this disclosure, the image frames may correspond to continuous frames of the subject that are received via the camera lens when the camera is pointed at the subject. Thus, capturing the image frames of the subject may not require taking a photograph of the subject. Usually, a photograph represents a point-in-time image of the subject that is saved either on a photographic film or is stored electronically. The images frames as described in conjunction with this disclosure may represent, in some embodiments, a continuous real-time set of frames of the subject. The image frames may not be required to be stored, or may be stored temporarily for a period of time. Figure 3A illustrates an exemplary image frame with a first subject having a first set of characteristics and Figure 3B illustrates an exemplary image frame with a second subject having a second set of characteristics according to some embodiments of the present disclosure. Figure 3A and Figure 3B may include image frames 300-1 and 300-2, including a first subject 302 in image frame 300-1 and a second subject 306 in image frame 300-2. The first set of characteristics, for example, associated with the first subject 302 may be a round head and the second subject 306 may have the second set of features including an elongated head. The image frames 300-1 and 300-2 may be captured by the camera of a smartphone 304.

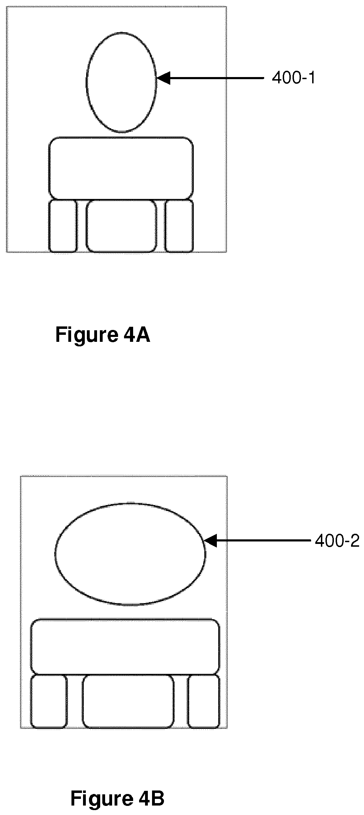

The image frames may be received by the subject recognizer 108. In some embodiments the subject recognizer 108 may detect the at least one subject within an image frame. The subject recognizer 108 may adopt various ways to detect the subject. Examples of different techniques to determine the subject within an image frame may include edge detection, facial detection and object detection. For example, if the subject is a human, a combination of edge detection and facial detection may be used to determine an outline of the human. Figure 4A illustrates an exemplary stencil 400-1 created of the first subject illustrated in Figure 3A. Similarly, Figure 4B illustrates an exemplary stencil 400-2 created of the second subject illustrated in Figure 3B.

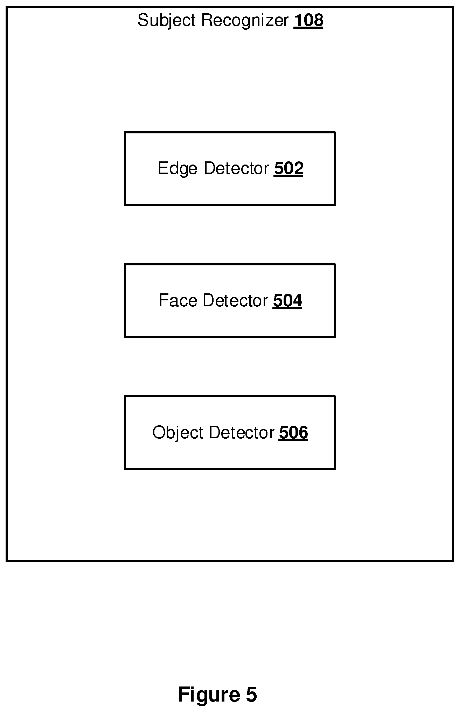

Figure 5 illustrates an exemplary illustration of subject recognizer according to some embodiments of the present disclosure. The subject recognizer 108 may include an edge detector 502, a face detector 504 and an object detector 506. Edge detection may include various mathematical methods to identify points in the digital image frames at which the image brightness changes sharply or has discontinuities. The points at which image brightness changes sharply are typically organized into a set of curved line segments termed edges. In some embodiments the edge detector 502 may detect the edges of the required subject in order to identify the subject. In some embodiments Matrix Laboratory (MATLAB) may be used by the edge detector 502, to assist in detecting the edges of the subjects to be identified.

In some embodiments, the face detector 504 may use various face detection algorithms to detect a face in the image frames. In an example, a human face may be detected by the face detector 504, which may be the subject whose stencil may have to be created. The face detection algorithms may scan the image frames to identify regions in the subject that contain skin color. A skin filter may be used which may detect color and texture. The face detection algorithms may also scan the image frames for patterns that could represent eyes and eyebrows, nostrils, and mouth. In some embodiments, the subject recognizer 108 may take the assistance of both the edge detector 502 and the face detector 504 to identify the subject within an image frame.

In some embodiments, the object detector 506 may determine objects which form a part of the identified subject. Different computer vision and image processing techniques may be used by the object detector 506 to identify semantic objects forming at least one part of the identified subject. In an example, MATLAB may be used to detect such objects. In an example, an insurance company may have clauses, stating that customer may get full money for the claims on damages to the bumper if a bumper protector was installed at the time of accident, and customer may have to pay for 10% from his pocket for the claims on damages to the bumper if a bumper protector was not installed at the time of accident. Hence, the object detector 506 in such a case may detect whether the car has bumper protectors installed.

In some embodiments, as per the photographic requirements stored in the photograph requirement database 104, a combination of edge detection and object detection may be required to satisfactorily identify the subject and the object forming a part of the subject. For example, an insurance company may require photograph of a car along with the damaged portion of the car in order to process the insurance claim. Also the insurance company may have a condition that to pay out the entire claimed amount with regards to a damaged bumper, bumper protectors should be used, and hence a photograph of the car with the bumper protectors is required to determine if bumper protectors were in fact installed. This data may be fetched by the subject recognizer 108, and the combination of the edge detector 502, which identifies the car as a subject and the object detector 504 which identifies the bumper protector as an object forming the part of the car may be used by the subject recognizer 108.

The identified subject may be received by the stencil creator 110. The stencil creator 110 may create a stencil for the identified subject alone, the identified object alone or a stencil for the subject along with the object forming a part of the subject. The stencil creator 110 may create the stencil of the subject, the object, or a combination of the subject and the object based on the photograph requirements fetched from the photograph requirement data 114. In some embodiments, the stencil may be sized based on the photograph requirements. In an example, sizing may include but not limited to cropping, scaling, transitioning, rotating and adding margin in the stencil.

In some embodiments, an assistive stencil may be created based on both the subject detected and the object detected by the subject recognizer 108. In an example, an insurance company may have clauses, stating that customer may get full money for the claims on damages on the exterior if bumper protector was installed at the time of accident, and customer may have to pay for 10% from his pocket for the claims on damages on the exterior if bumper protector was not installed at the time of accident. Hence photograph of the car may have to be taken along with the bumper protectors if present, and hence an assistive stencil combining the subject which may be the car and the object which may be the bumper protectors may have to be created.

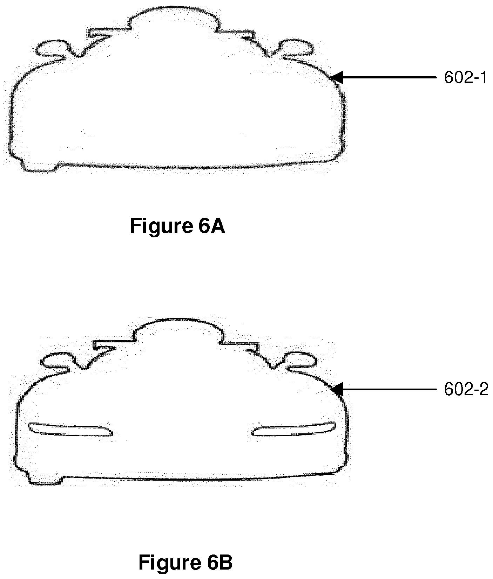

Figure 6A illustrates an exemplary assistive stencil based on the subject recognition in accordance with some embodiments of the present disclosure. Figure 6A comprises a first assistive stencil 602-1 created by the stencil creator 110 based on the subject recognized by the subject recognizer 108, wherein only the outer edges of the subject may be detected by the edge detector. In an example, the first assistive stencil 602-1 may be stencil for the rear view of a car, which may be the subject identified by the edge subject recognizer 108.

Figure 6B illustrates an exemplary second assistive stencil based on the subject recognition and the object recognition in accordance with some embodiments of the present disclosure. Figure 6B comprises a second assistive stencil 602-2 created by the stencil creator 110 based on the subject recognized and the object detected by the subject recognizer 108. In an example, the second assistive stencil 602-2 may be the rear view of a car comprising a combined stencil of the outer edge and the objects which may be the bumper protectors.

In some embodiments, in addition to the photographic requirements, other parameters such as, but not limited to, the capabilities of the photographic device, the current environmental conditions, the user preferences and the user behavior history may be considered when creating the stencil by the stencil creator 110. In some other embodiments, the capabilities of the camera 106 such as, but not limited to, processing capabilities, storage capabilities, type of optical lens used in the camera 106, pixel resolution of camera 106, etc. may be determined and accordingly the stencils may be created by the stencil creator 110. For example, if the pixel resolution of the camera 106 is low, the stencil may be created and sized in a way, such that a user may take a photograph from a close distance from the subject. Such stencils which enable the user to take a close up photograph of the subject may minimize noise or distortion in the photograph caused by the low pixel resolution of the camera 106, thus making the photograph acceptable. An optimum assistive stencil may be created taking into account the photographic requirements and the camera capabilities. Further, sensors associated with the APS 102, which may be used to determine the prevalent light conditions. For example, a light sensor may determine the intensity of light in the proximity of the APS 102 at a given point of time. Poor light may require that a photograph is to be taken from a distance close to the subject and hence a different set of stencils may be created than when light conditions are good. However, an optimum stencil may be created taking into consideration environmental conditions and the photographic requirements.

In some embodiments, one or more preferences of the user may be considered by the stencil creator 110, while creating the assistive stencil. The user may indicate preferences such as a color of the assistive stencil and thickness of the outline associated with the assistive stencil to be created. The user preferences may be explicitly specified by the user or may be learned by the stencil creator 110, based on user behavior history.

The assistive stencils created may be displayed on the display 112. Examples of the display 112 may be cathode ray tube (CRT), liquid crystal display (LCD), light-emitting diode (LED), plasma, or the like. In some embodiments, the assistive stencil may be displayed on the display 112, to assist the user to take photographs confirming to the photographic requirements.

In some embodiments, the assistive stencil may be overlaid on the image frame along with the subject identified by the subject recognizer 108 and displayed on the display 112. This may help the user to take photographs using the APS 102, in conformity with the photograph requirements, by adjusting the APS 102, so that the assistive stencil may be overlaid on the subject.

In some embodiments, only a specific part of the subject may be identified based on the photograph requirements, and the assistive stencil may be created accordingly by the APS 102. In an example, a certain Government passport issuing authority may require passport photos to be chest upwards. The APS 102 may identify the subject in the frame and create the assistive stencil for the subject chest upwards.

In some embodiments an image frame may include only a part of a subject. The part of the subject present within an image frame may be considered to be the subject for the purposes of the present disclosure. In an example, only left side front door of a car may be present in an image frame. The APS 102 may detect the left side front door of the car as a subject and create a stencil based on the photograph requirements fetched from the photograph requirements database 104. In some embodiments, the APS 102 may detect different parts of the subject and create stencils for each of the parts separately, according to the photograph requirements.

In certain other embodiments, the assistive stencil may not only comprise the outer edges of the subjects, but may also include a background of a particular specified color. In an example, a certain Government passport issuing authority may require background of the passport photos to be blue. The APS 102 may create the assistive stencil of the subject identified, with a blue colored background as per the photograph requirements.

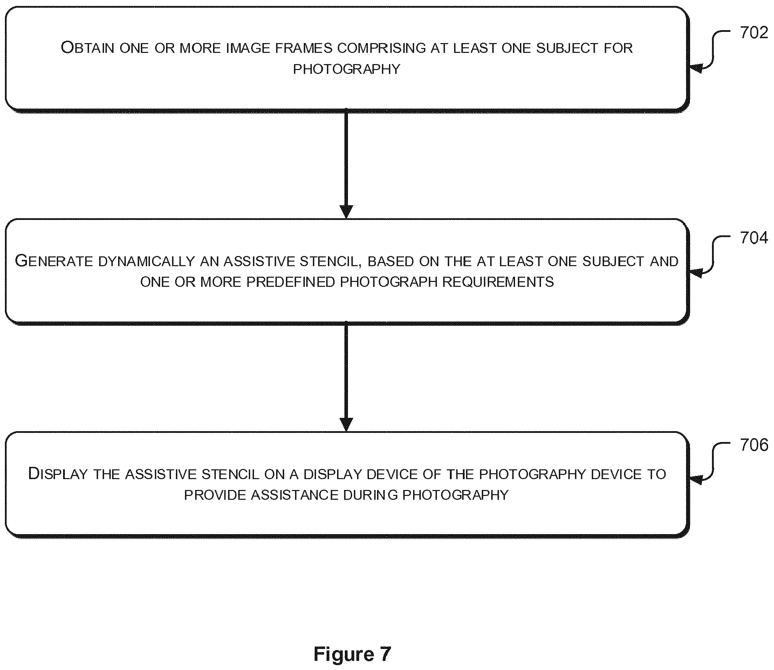

Figure 7 illustrates an exemplary method for assistive photography in accordance with some embodiments of the present disclosure.

The methods 700 be described in the general context of computer executable instructions. Generally, computer executable instructions can include routines, programs, objects, components, data structures, procedures, modules, and functions, which perform particular functions or implement particular abstract data types. The methods 700 may also be practiced in a distributed computing environment where functions are performed by remote processing devices that are linked through a communication network. In a distributed computing environment, computer executable instructions may be located in both local and remote computer storage media, including memory storage devices.

Reference is made to Figures 7, the order in which the method 700 is described is not intended to be construed as a limitation, and any number of the described method blocks can be combined in any order to implement the method 700 or alternative methods. Additionally, individual blocks may be deleted from the method 700 without departing from the scope of the subject matter described herein. Furthermore, the method 700 can be implemented in any suitable hardware, software, firmware, or combination thereof.

With reference to Figure 7, at step 702, one or more image frames comprising at least one subject for photography may be obtained. In an example, the image frames may correspond to continuous frames of the subject that are received via the camera lens when the camera is pointed at the subject. Thus, capturing the image frames of the subject may not require taking a photograph of the subject. The image frames as described in conjunction with this disclosure may represent, in some embodiments, a continuous real-time set of frames of the subject. The image frames may not be required to be stored, or may be stored temporarily for a period of time. The subject may be a human or any other inanimate object, or the likes.

In some embodiments, the subject may be detected using popular edge detection algorithms and face detection algorithms. These methods may capture the outer edges of the subject identified. In certain other embodiments, objects forming a part of the subject may also need to be detected, and a stencil may be created along with these objects. Detecting a subject from the image frames is explained in detail in conjunction with Figure 5.

At step 704, an assistive stencil, may be dynamically generated based on the one or more image frames comprising the at least one subject and one or more predefined photograph requirements. In some embodiments, the photograph requirements may include width of photograph, height of photograph, background of photograph, margin above the at least one subject or height of the at least one subject.

In some embodiments, the APS 102 may size the assistive stencil, in order to be compliant with the photograph requirements. In an example, sizing of the assistive stencils may include cropping, scaling, transitioning, rotating, adding padding in the stencil.

In some embodiments, the assistive stencils may be created based on other parameters such as, but not limited to, the capabilities of the camera 106, the current environmental conditions, the user preferences and the user behavior history. In some embodiments, the capabilities of the camera 106 such as, but not limited to, processing capabilities, storage capabilities, type of optical lens used in the camera 106, pixel resolution of the camera 106, etc. may be determined and accordingly assistive stencils may be created. The stencil creator 110, may generate the assistive stencils based on the identified subjects, the photograph requirements, the capabilities of the camera 106, the current environmental conditions, the user preferences and the user behavior history as explained in conjunction with Figure 1.

At step 706, the assistive stencil may be displayed to provide assistance during photography. In some embodiments, the assistive stencil may be overlaid on the image frames, and displayed on the display 112 in order to assist the photographer to adjust the APS 102 in order to take photographs in conformity with the photograph requirements. Adjusting the APS 102 may be moving in a particular direction including backward, forward and sideways or adjusting the focal length of the image frame capturer 106. In some other embodiments, the assistive stencil may be created along with a background of a particular to meet the photograph requirements.

The advantages of the present invention may be the ability to dynamically create assistive stencil for the actual subject to be photographed at the time of photography, based on certain photograph requirements and live conditions.

### Computer System

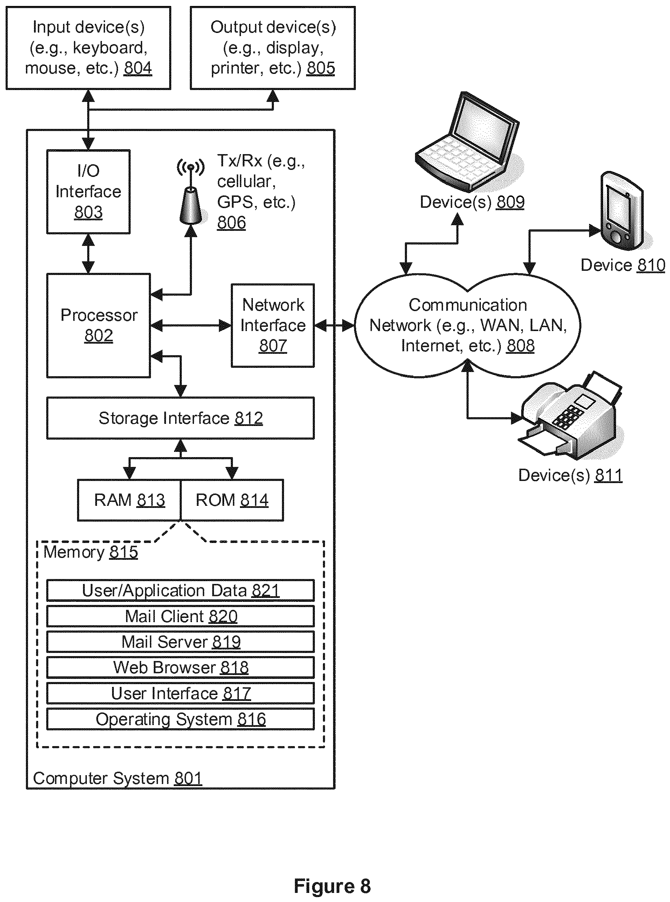

Figure 8 is a block diagram of an exemplary computer system for implementing embodiments consistent with the present disclosure. Variations of computer system 801 may be used for implementing the devices and systems disclosed herein. Computer system 801 may comprise a central processing unit ("CPU" or "processor") 802. Processor 802 may comprise at least one data processor for executing program components for executing user- or system-generated requests. A user may include a person, a person using a device such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 802 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 802 may be disposed in communication with one or more input/output (I/O) devices via I/O interface 803. The I/O interface 803 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.11 a/b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 803, the computer system 801 may communicate with one or more I/O devices. For example, the input device 804 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 805 may be a printer, fax machine, video display (e.g., cathode ray tube (CRT), liquid crystal display (LCD), light-emitting diode (LED), plasma, or the like), audio speaker, etc. In some embodiments, a transceiver 806 may be disposed in connection with the processor 802. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 802 may be disposed in communication with a communication network 808 via a network interface 607. The network interface 807 may communicate with the communication network 808. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 608 may include, without limitation, a direct interconnection, local area network (LAN), wide area network (WAN), wireless network (e.g., using Wireless Application Protocol), the Internet, etc. Using the network interface 807 and the communication network 808, the computer system 801 may communicate with devices 810, 811, and 812. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 601 may itself embody one or more of these devices.

In some embodiments, the processor 802 may be disposed in communication with one or more memory devices (e.g., RAM 813, ROM 814, etc.) via a storage interface 812. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc. Variations of memory devices may be used for implementing, for example, the databases disclosed herein.

The memory devices may store a collection of program or database components, including, without limitation, an operating system 816, user interface application 817, web browser 818, mail server 816, mail client 820, user/application data 821 (e.g., any data variables or data records discussed in this disclosure), etc. The operating system 816 may facilitate resource management and operation of the computer system 801. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 817 may facilitate display, execution, interaction, manipulation, or operation of program components through textual or graphical facilities. For example, user interfaces may provide computer interaction interface elements on a display system operatively connected to the computer system 801, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 801 may implement a web browser 818 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 801 may implement a mail server 819 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 901 may implement a mail client 820 stored program component. The mail client may be a mail viewing application, such as Apple Mail, Microsoft Entourage, Microsoft Outlook, Mozilla Thunderbird, etc.

In some embodiments, computer system 801 may store user/application data 821, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of any computer or database component may be combined, consolidated, or distributed in any working combination.

The specification has described a system and method for stencil based assistive photography. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method of assistive photography, the method comprising:
obtaining one or more image frames comprising at least one subject for photography;
generating dynamically an assistive stencil based on the at least one subject and one or more predefined photograph requirements; and
displaying the assistive stencil on a display device to provide assistance during photography.

2. The method of claim 1, wherein the one or more predefined photograph requirements comprise at least one of: a width of a photograph; a height of a photograph; a background of a photograph; a margin above the at least one subject; a height of the at least one subject; a margin below the at least one subject; a margin to the left of the at least one subject; a margin to right of the at least one subject; and/or a width of at least one part of the at least one subject.

3. The method of claim 1 or claim 2, wherein the assistive stencil is generated based on edge detection of the at least one subject.

4. The method of any of claims 1 to 3, wherein the assistive stencil is generated based on facial recognition of the at least one subject.

5. The method of any of the preceding claims, wherein the assistive stencil is generated based on object detection, wherein the object comprises at least one part of the at least one subject.

6. The method of any of the preceding claims, wherein generating the assistive stencil comprises sizing the assistive stencil based on the one or more predefined photograph requirements.

7. The method of claim 1, wherein the assistive stencil is generated based on at least one of: one or more environmental conditions; one or more camera capabilities; a camera state; user preferences; and/or a user behavior history.

8. A system for assistive photography, comprising:
a hardware processor;
a display device; and
a memory storing instructions executable by the hardware processor for:
obtaining one or more image frames comprising at least one subject for photography;
generating dynamically an assistive stencil, based on the at least one subject and one or more predefined photograph requirements; and
displaying the assistive stencil on the display device to provide assistance during photography.

9. The system of claim 8, wherein the one or more predefined photograph requirements comprise at least one of: a width of a photograph; a height of a photograph; a background of a photograph; a margin above the at least one subject; a height of the at least one subject; a margin below the at least one subject; a margin to the left of the at least one subject; a margin to right of the at least one subject; and/or a width of at least one part of the at least one subject.

10. The system of claim 8 or claim 9, wherein the assistive stencil is generated based on edge detection of the at least one subject.

11. The system of any of claims 8 to 10, wherein the assistive stencil is generated based on facial recognition of the at least one subject.

12. The system of any of claims 8 to 11, wherein the assistive stencil is generated based on object detection, wherein the object comprises at least one part of the at least one subject

13. The system of any of claims 8 to 12, wherein generating the assistive stencil comprises sizing the assistive stencil based on the one or more predefined photograph requirements.

14. The system of any of claims 8 to 13, wherein the assistive stencil is generated based on at least one of: one or more environmental conditions; one or more camera capabilities; a camera state; user preferences; and/or a user behavior history.

15. A non-transitory computer-readable medium storing instructions for assistive photography, wherein upon execution of the instructions by one or more processors, the processors perform the method of any of claims 1 to 7.
